(19) Europäisches Patentamt
European Patent Office
Office européen des brevets

(11) EP 4 007 826 B1

(12) **EUROPÄISCHE PATENTSCHRIFT**

(45) Veröffentlichungstag und Bekanntmachung des Hinweises auf die Patenterteilung:
**07.06.2023 Patentblatt 2023/23**

(21) Anmeldenummer: **20744073.6**

(22) Anmeldetag: **29.07.2020**

(51) Internationale Patentklassifikation (IPC):
***D01F 2/00*** (2006.01) ***D01F 11/02*** (2006.01)
***D04H 1/4258*** (2012.01)

(52) Gemeinsame Patentklassifikation (CPC):
**D01F 2/00; D01F 11/02; D04H 1/4258**

(86) Internationale Anmeldenummer:
**PCT/EP2020/071378**

(87) Internationale Veröffentlichungsnummer:
**WO 2021/023594 (11.02.2021 Gazette 2021/06)**

(54) **VERFAHREN ZUR HERSTELLUNG VON LYOCELL-STAPELFASERN**

METHOD FOR THE PREPARATION OF LYOCELL STAPLE FIBRES

PROCÉDÉ DE FABRICATION DE FIBRES DISCONTINUES LYOCELLULAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2019 EP 19189737**

(43) Veröffentlichungstag der Anmeldung:
**08.06.2022 Patentblatt 2022/23**

(73) Patentinhaber: **Lenzing Aktiengesellschaft
4860 Lenzing (AT)**

(72) Erfinder:
- **SCHIRK, Christian
4810 Gmunden (AT)**
- **SCHREMPF, Christoph
4701 Bad Schallerbach (AT)**
- **GUGERELL, Franz
3382 Loosdorf (AT)**

(74) Vertreter: **Schwarz & Partner Patentanwälte GmbH
Patentanwälte
Wipplingerstraße 30
1010 Wien (AT)**

(56) Entgegenhaltungen:
**WO-A1-2004/007818
DE-A1- 10 043 297
GB-A- 2 373 784
US-A- 5 562 739
US-B2- 7 951 237**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 4 007 826 B1

**Beschreibung**

Die vorliegende Erfindung betrifft ein Verfahren zur Herstellung von Lyocell-Stapelfasern sowie eine Lyocell-Stapelfaser, die mit dem erfindungsgemäßen Verfahren erhältlich ist.

STAND DER TECHNIK

In den letzten Jahrzehnten wurden bedingt durch die Umweltproblematik des bekannten Viskoseverfahrens zur Herstellung cellulosischer Fasern intensive Anstrengungen unternommen, alternative und umweltfreundlichere Verfahren zur Verfügung zu stellen. Als eine besonders interessante Möglichkeit hat sich dabei in den letzten Jahren herauskristallisiert, Cellulose ohne Ausbildung eines Derivates in einem organischen Lösungsmittel aufzulösen und aus dieser Lösung Formkörper zu extrudieren. Fasern, welche aus solchen Lösungen ersponnen werden, erhielten von der BISFA (The International Bureau for the Standardization of Man-made Fibres) den Gattungsnamen Lyocell zugeteilt, wobei unter einem organischen Lösungsmittel ein Gemisch aus einer organischen Chemikalie und Wasser verstanden wird.

Weiters sind solche Fasern auch unter dem Begriff "lösungsmittelgesponnene Fasern" bekannt.

Es hat sich herausgestellt, dass sich als organisches Lösungsmittel insbesondere ein Gemisch aus einem tertiären Aminoxid und Wasser hervorragend zur Herstellung von Lyocell-Fasern bzw. anderen Lyocell-Formkörpern eignet. Als Aminoxid wird dabei vorwiegend N-Methylmorpholin-N-oxid (NMMO) verwendet. Andere geeignete Aminoxide sind in der EP 0 553 070 A geoffenbart. Auch ionische Flüssigkeiten sind als organisches Lösungsmittel geeignet. Verfahren zur Herstellung cellulosischer Formkörper aus einer Lösung von Cellulose in einem Gemisch aus NMMO und Wasser sind z. B. in der USA 4,246,221 oder in der WO 93/19230 A geoffenbart. Dabei wird die Celluloselösung aus einer Spinndüse extrudiert, in einem Luftspalt verstreckt und aus der Lösung in einem wässrigen Fällbad ausgefällt. Dieses Verfahren wird im folgenden als "Aminoxidverfahren" oder "Lyocellverfahren" bezeichnet, wobei mit der Abkürzung "NMMO" im folgenden sämtliche tertiäre Aminoxide gemeint sind, die Cellulose lösen können. Nach dem Aminoxidverfahren hergestellte Fasern zeichnen sich durch eine hohe Faserfestigkeit im konditionierten sowie im nassen Zustand, einen hohen Nassmodul und eine hohe Schlingenfestigkeit aus.

Kommerziell hergestellte Lyocellfasern liegen vorwiegend in Form von Stapelfasern vor.

Beim Extrudieren der Spinnlösung durch eine Spinndüse entstehen zunächst endlose Filamente aus Spinnlösung. Diese werden in einem Spinnbad ausgefällt, wodurch nach wie vor endlose Cellulosefilamente gebildet werden. Durch Schneiden dieser Cellulosefilamente auf eine diskrete Länge entstehen Stapelfasern.

Zur Verarbeitung von Lyocell-Fasern nach dem Verspinnen ist umfangreicher Stand der Technik bekannt.

Jedenfalls notwendige Schritte zur Verarbeitung der Lyocell-Fasern sind (ohne dass die folgende Auflistung als zeitliche Reihenfolge des Verfahrens verstanden werden soll):

- eine mehrfache Wäsche derselben;
- das Aufbringen einer Avivage;
- Maßnahmen, um in die Faser eine Kräuselung zu induzieren;
- eine oder gegebenenfalls auch mehrere Trocknung(en) der Faser;
- sowie eben das Schneiden zu Stapelfasern.

Es ist weiters bekannt, dass Lyocell-Fasern eine gewisse Tendenz zur Fibrillation aufweisen. Gegen diese Eigenschaft wurden bereits zahlreiche Maßnahmen vorgeschlagen, wobei die Behandlung der Lyocell-Faser mit einem Vernetzungsmittel eine kommerziell bedeutsame Vorgangsweise darstellt.

Geeignete Vernetzungsmittel sind beispielsweise in der EP 0 538 977 A, der WO 97/49856 A und der WO 99/19555 A beschrieben. Andere Vernetzungsmittel sind z.B. aus der WO 94/09191 A und der WO 95/28516 A bekannt.

Ein besonders bevorzugtes Vernetzungsmittel ist eine Substanz der Formel (I)

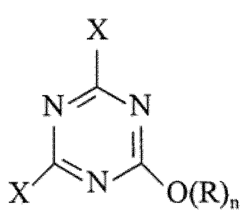

(I)

wobei X Halogen, R=H oder einen ionischen Rest darstellt und n=0 oder 1 ist, bzw. ein Salz dieser Verbindung. Diese Substanz wird im Folgenden auch als "NHDT" bezeichnet.

Aus dem Stand der Technik sind weiters unterschiedliche Konzepte zur Frage, wann die Cellulosefilamente zu Stapelfasern geschnitten werden und daraus resultierend, in welcher Form (Endlosfilament oder bereits geschnittene Stapelfaser) die Lyocell-Fasern die verschiedenen oben angesprochenen Behandlungsstufen durchlaufen.

Beispielsweise ist aus der WO 94/27903 A und der WO 95/24520 A ein Verfahren bekannt, bei welchem die Schritte der Wäsche sowie auch der Induzierung einer Kräuselung an den noch nicht geschnittenen Cellulosefilamenten durchgeführt werden. Man spricht hier auch von einer "Kabelnachbehandlung". Die Kräuselung wird den Fasern in diesem Verfahren mittels einer sogenannte "Stuffer Box" induziert. Die WO 98/28516 A beschreibt, dass Lyocell-Fasern im Rahmen einer Kabelnachbehandlung mit einem Vernetzungsmittel behandelt werden können.

Aus WO 97/14829 A wiederum ist ein Verfahren bekannt, bei dem die Cellulosefilamente unmittelbar nach dem Verspinnen und dem ersten Waschbad zu Stapelfasern geschnitten werden.

Im Verfahren der WO 97/14829 A wird aus den Stapelfasern ein Vlies gebildet und durch Quetschen bzw. Abpressen des Vlieses in den Fasern eine sogenannte "permanente Kräuselung" erzielt. Die weiteren Verarbeitungsschritte bis zum erstmaligen Trocknen der Fasern werden in Form von Stapelfasern bzw. in Form dieses Vlieses durchlaufen.
Dieses Konzept wird im Folgenden als "Vliesnachbehandlung" bezeichnet.

Alternative Verfahren zur Herstellung von vernetzten Fasern sind aus den US 5,562,739 A, GB 2 373 784 A, und WO 2004/007818 A1 bekannt.

Weitere Details zur Verarbeitung von frisch gesponnenen Fasern sind aus den CN204265902 (U), CN203960407 (U), CN203904520 (U), CN203403200 (U), CN203402582 (U), CN204000264 (U), CN203999953 (U), CN106757906 (A) und CN108360182 (A) bekannt.

Insbesondere im Rahmen der Herstellung von mit einem Vernetzungsmittel behandelten Lyocell-Stapelfasern (im Folgenden: "vernetzte Fasern" genannt) stellen sich mit den bekannten Verfahren zur Verarbeitung der frisch gesponnenen Fasern Probleme dar, sowohl hinsichtlich des Chemikalienverbrauchs als auch hinsichtlich der Effizienz des Verfahrens.

## KURZE BESCHREIBUNG DER ERFINDUNG

Die vorliegende Erfindung stellt sich zur Aufgabe, ein verbessertes Verfahren zur Herstellung von vernetzten Lyocell-Stapelfasern zur Verfügung zu stellen.

Diese Aufgabe wird durch ein Verfahren zur Herstellung von Lyocell-Stapelfasern gelöst, umfassend die Schritte in folgender Reihenfolge:

a) Extrudieren von Filamenten aus einer Lösung von Cellulose in einem organischen Lösungsmittel
b) Ausfällen der Cellulose zur Bildung von endlosen Cellulosefilamenten
c) Waschen der Cellulosefilamente
d) In-Kontakt-Bringen der Cellulosefilamente mit einem Vernetzungsmittel
e) Reaktion der Cellulosefilamente mit dem Vernetzungsmittel in einer Reaktionskammer
f) Waschen der behandelten Cellulosefilamente
g) Schneiden der gewaschenen Cellulosefilamente zu Stapelfasern
h) Bildung eines Faservlieses aus den Stapelfasern und Abpressen des Faservlieses
i) Avivierung des Faservlieses und Abpressen des Faservlieses.

Bevorzugte Ausführungsformen sind in den Unteransprüchen angeführt.

## KURZE BESCHREIBUNG DER FIGUREN

Figur 1 zeigt ein Blockschema zur Veranschaulichung des Ablaufs einer bevorzugten Ausführungsform des erfindungsgemäßen Verfahrens.
Figur 2 zeigt eine Aufnahme einer erfindungsgemäßen Lyocell-Stapelfaser unter dem Lichtmikroskop mit polarisiertem Licht.
Figur 3 zeigt eine Gegenüberstellung der Höller-Faktoren von Lyocellfasern des Standes der Technik und erfindungsgemäßen Lyocell-Stapelfasern.

## DETAILLIERTE BESCHREIBUNG DER ERFINDUNG

Es wurde überraschenderweise gefunden, dass sich Elemente der beiden oben erwähnten Konzepte der Kabelnachbehandlung einerseits und der Vliesnachbehandlung andererseits in neuartiger Weise kombinieren lassen, wodurch sich die Fasereigenschaften erheblich verbessern lassen.

Gemäß der vorliegenden Erfindung erfolgt die erste Wäsche der Fasern (zur Entfernung des Lösungsmittels) und das In-Kontakt-Bringen der Fasern mit dem Vernetzungsmittel, sowie die Reaktion mit dem Vernetzungsmittel noch in Form von (endlosen) Cellulosefilamenten, also in Kabelform. Erst nach erneuter Wäsche (im Folgenden auch "Vernetzerwäsche" genannt) werden die Cellulosefilamente zu Stapelfasern geschnitten, in Form eines Vlieses gebracht, abgepresst und mit einer Avivage versehen.

Es wurde gefunden, dass im Vergleich zur sogenannten "Vliesnachbehandlung" die Durchführung der Schritte c) bis f), insbesondere Schritt e), die Behandlung mit einem Vernetzungsmittel, an Fasern in Kabelform zu signifikanten Einsparungen im Bereich der eingesetzten Energie und der eingesetzten Chemikalien führt. Das heißt auch, dass im Vergleich zur "Vliesnachbehandlung" mildere Bedingungen für die Behandlung der Faser eingesetzt werden können.

Zudem weisen die Fasern aber durch die abschließenden Verfahrensabschnitte h) und i) in Form eines Vlieses die geschätzte Eigenschaft der "permanenten Kräuselung" auf.

Als "permanente Kräuselung" oder "permanenter Crimp" wird analog zur WO 97/14829 das Vorhandensein von durchschnittlich mindestens zwei Quetschstellen pro Millimeter Filamentlänge verstanden, wobei diese Quetschstellen auch an der getrockneten Faser erhalten bleiben und bei Betrachtung unter linear polarisiertem Licht als Farbänderungen sichtbar sind. Bevorzugt ist dieser "permanente Crimp" auch noch nach der mechanischen Beanspruchung, die beim Kardieren und Garnspinnen entsteht, feststellbar.

Überraschenderweise weisen mit dem erfindungsgemäßen Verfahren erhältliche vernetzte Fasern bessere Faserdaten auf als Fasern, die mit dem gleichen Vernetzungsmittel nach dem Stand der Technik (und zwar sowohl als Vlies oder als Kabel) behandelt werden.

Eine bevorzugte Ausführungsform des erfindungsgemäßen Verfahrens ist dadurch gekennzeichnet, dass die Filamente bzw. die Stapelfasern erstmals nach dem Schritt i) getrocknet werden.

Die Reaktion der Cellulosefilamente mit dem Vernetzungsmittel erfolgt üblicherweise bei erhöhter Temperatur.

Insbesondere kann die Reaktion im Schritt e) unter Energiezufuhr durchgeführt werden.

Bevorzugt wird weiters die Reaktion im Schritt e) in Anwesenheit von Dampf durchgeführt. Selbstverständlich bieten sich auch andere Möglichkeiten, z.B. die Behandlung mit elektromagnetischen Strahlen, insbesondere in einer Mikrowelle, an.

In einer bevorzugten Ausführungsform wird der Schritt e) des erfindungsgemäßen Verfahrens in einer Dampfkammer durchgeführt. Zum Beispiel kann für diesen Schritt eine J-Box eingesetzt werden.

Die Dauer des Schritts e) kann 3 bis 30 Minuten, bevorzugt 10 Minuten bis 25 Minuten, besonders bevorzugt 15 bis 20 Minuten betragen.

Das Vernetzungsmittel kann in einer Menge eingesetzt wird, sodass sich ein Gehalt G an Vernetzungsmittel in mol pro 1 kg Cellulose atro ergibt, welcher folgender Formel genügt:

$$G \times R = 0{,}10 - 0{,}45,$$

bevorzugt 0,10 - 0,35, besonders bevorzugt 0,20 - 0,35,
wobei R die Anzahl an reaktiven Gruppen im Vernetzungsmittel bedeutet. R ist mindestens 2; für das Vernetzungsmittel NHDT mit der Formel (I) ist R = 2. Im Falle anderer Vernetzungsmittel kann R > 2 sein. Beispielsweise gilt für das als Vernetzungsmittel verwendbare Natriumsalz der p-[(4,6-dichlor-1,3,5-triazin-2 yl)amino]benzensulfonsäure ("SDTB"): R=3.

Unter dem Begriff "Reaktive Gruppen" versteht der Fachmann für die Zwecke dieser Erfindung Gruppen, die in der Lage sind, kovalente Bindungen mit OH-Gruppen der Cellulose einzugehen.

Die zum Erreichen des gewünschten Gehalts an Vernetzungsmittel in der Cellulose notwendige Einsatzmenge kann vom Fachmann im Rahmen von Vorversuchen ermittelt werden. Üblicherweise kann davon ausgegangen werden, dass in einer Größenordnung von 30 Gew.% - 70 Gew.%, insbesondere 40 Gew.% bis 60 Gew.% des ursprünglich eingesetzten Vernetzungsmittels in der Faser aufgefunden werden können.

Die Menge an in der Faser erhaltenem Vernetzungsmittel kann anhand der Analyse einer für das Vernetzungsmittel typischen Signatur, z.B. im Fall von stickstoffhältigen Vernetzungsmitteln anhand einer quantitativen Stickstoffanalyse der Faser, festgestellt werden.

Als Vernetzungsmittel wird im erfindungsgemäßen Verfahren in einer bevorzugten Ausführungsform eine Verbindung der Formel (I)

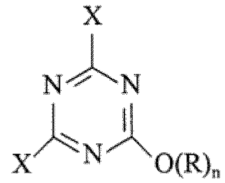

(I)

eingesetzt, wobei X Halogen, R=H oder einen ionischen Rest darstellt und n=0 oder 1 ist, bzw. ein Salz dieser Verbindung, bevorzugt das Natriumsalz des 2,4-Dichlor-6-hydroxy-1.3.5-triazins. Im Folgenden wird diese Verbindung mit dem Kürzel "NHDT" abgekürzt.

Diese Verbindung hat zwei reaktive Gruppen (zwei Halogen-Reste).

Bevorzugt wird das Vernetzungsmittel der Verbindung der Formel (I) in einer Menge von 30-80 g, bevorzugt 45-60 g auf 1 kg Cellulose atro eingesetzt.

Die Aufgabe der vorliegenden Erfindung wird durch eine Lyocell-Stapelfaser gelöst, die durch das zuvor beschriebene erfindungsgemäße Verfahren unter Verwendung des Vernetzungsmittels NHDT erhältlich ist und eine permanente Kräuselung und einen Variationskoeffizienten ($CV_{NSF}$) der Nassscheuerfestigkeit *(NSF)* von kleiner gleich 50 % aufweist.

In einer bevorzugten Ausführungsvariante weist die erfindungsgemäße Lyocell-Stapelfaser einen $CV_{NSF}$ von kleiner gleich 45 % auf, besonders bevorzugt von kleiner gleich 40 % auf.

Die *NSF* ist eine Kennzahl für die Beständigkeit der Faser gegenüber Fibrillation, die beim Waschen des Textils auftritt und nach der in den Beispielen angegebenen Testmethode bestimmt wird. Anhand der guten Nassscheuerfestigkeiten der erfindungsgemäßen Faser wird auch diese für vernetzte Fasern wesentliche Anforderung erfüllt.

Die Variationskoeffizienten $CV_{NSF}$ der Fasern werden gemäß der weiter unten im Abschnitt zu den Beispielen beschriebenen Messmethode ermittelt.

Die niedrigen $CV_{NSF}$-Werte der erfindungsgemäßen Fasern - wie zuvor spezifiziert - stellen ein primäres Unterscheidungsmerkmal gegenüber Fasern, welche mit NHDT durch Vliesvernetzung hergestellt wurden, dar. Wie zuvor ausgeführt, kommt es bei der herkömmlichen Vliesnachbehandlung zu einer Schädigung der Fasern während der Vernetzungsreaktion, was nicht nur eine Reduktion der Festigkeit zur Folge hat, sondern auch zu einer stärkeren Variation der (reduzierten) Festigkeit führt, da nicht alle Celluloseketten im gleichen Maße geschädigt werden. Dies resultiert schließlich in einem höheren Variationskoeffizienten $CV_{NSF}$ der Nassscheuerfestigkeit.

Wie in den Tabellen 4 und 5 weiter unten dargestellt, weisen die erfindungsgemäßen Fasern gemäß den Beispielen 1 bis 8 durchwegs $CV_{NSF}$-Werte von weniger als 45 % auf, ein Großteil sogar $CV_{NSF}$-Werte unter 40 %. Ein derart niedriger $CV_{NSF}$ ist von Fasern, die mit NHDT durch Vliesnachbehandlung vernetzt wurden, nicht zu erwarten. Die Auswertung zahlreicher Beispiele von vliesvernetzten Fasern (beispielsweise kommerziell erhältliche Lyocell-Stapelfaser des Typs LENZING™ Lyocell LF mit einem Titer von 1,7 dtex der Lenzing Aktiengesellschaft, Werkstraße 2, A-4860 Lenzing) hat gezeigt, dass diese durchwegs $CV_{NSF}$-Werte im Bereich zwischen 60 % und 80 % aufweisen.

Die Aufgabe der vorliegenden Erfindung wird auch durch eine Lyocell-Stapelfaser gelöst, die durch das erfindungsgemäße Verfahren unter Verwendung des Vernetzungsmittels NHDT erhältlich ist und weiters durch die Kombination folgender Eigenschaften gekennzeichnet ist:

- die Faser weist einen Titer von 1,2 dtex bis 1,5 dtex, bevorzugt von 1,25 dtex bis 1,45 dtex, auf,
- die Faser weist eine permanente Kräuselung auf,
- die Faser weist eine Faserfestigkeit in konditioniertem Zustand von zumindest 36 cN/tex, bevorzugt von 38 cN/tex bis 42 cN/tex auf,
- die Faser weist einen Höller-Faktor F1 $\geq$ 2,1, bevorzugt $\geq$ 2,4, besonders bevorzugt von 2,5 bis 3,2 auf, und
- die Faser weist einen Höller-Faktor F2 $\geq$ 3,0, bevorzugt $\geq$ 3,5, besonders bevorzugt von 4,0 bis 5,5 auf.

Ebenso wird die Aufgabe der vorliegenden Erfindung auch durch eine Lyocell-Stapelfaser gelöst, die durch das erfindungsgemäße Verfahren unter Verwendung des Vernetzungsmittels NHDT erhältlich ist und weiters durch die Kombination folgender Eigenschaften gekennzeichnet ist:

- die Faser weist einen Titer von 0,6 dtex bis 1,2 dtex, bevorzugt von 0,7 dtex bis 1,15 dtex, besonders bevorzugt von 0,8 dtex bis 1,1 dtex, auf,
- die Faser weist eine permanente Kräuselung auf,
- die Faser weist eine Faserfestigkeit in konditioniertem Zustand von zumindest 40 cN/tex, bevorzugt von 42 cN/tex bis 49 cN/tex, besonders bevorzugt von 43,5 cN/tex bis 46 cN/tex, auf,
- die Faser weist einen Höller-Faktor F1 $\geq$ 2,8, bevorzugt $\geq$ 3,0, besonders bevorzugt von 3,2 bis 3,5 auf, und
- die Faser weist einen Höller-Faktor F2 $\geq$ 3,0, bevorzugt $\geq$ 3,6, besonders bevorzugt von 3,9 bis 5,5 auf.

In einer bevorzugten Ausführungsvariante weisen diese Fasern wie vorstehend beschrieben mit Titern von 0,6 dtex bis 1,2 dtex und 1,2 dtex bis 1,5 dtex jeweils einen Variationskoeffizienten der Nassscheuerfestigkeit $CV_{NSF}$ von kleiner gleich 50 %, insbesondere von kleiner gleich 45 %, auf.

Im Normalfall liegt bei kommerziell hergestellten Fasern eine Vielzahl von Fasern vor. Unter "Titer einer Faser" versteht der Fachmann hier den Mittelwert aus mehreren Messungen an mehreren Fasern, bevorzugt aus 20 Messungen.

Die erfindungsgemäße Faser unterscheidet sich zunächst von am Markt erhältlichen vernetzten Lyocellfasern, welche durch eine herkömmliche Kabelnachbehandlung hergestellt werden, durch die oben beschriebene Eigenschaft der permanenten Kräuselung.

Gegenüber von mit NHDT vernetzten Lyocellfasern, welche mit einer Vliesnachbehandlung hergestellt wurden, unterscheidet sich die erfindungsgemäße Faser insbesondere durch ihre erhöhte Faserfestigkeit in konditioniertem Zustand.

Weiters unterscheiden sich die erfindungsgemäßen Fasern von mit NHDT nach Vliesnachbehandlung vernetzten Lyocellfasern in dem deutlich niedrigeren $CV_{NSF}$, wie zuvor dargelegt.

Im Jahre 1984 führten Höller und Puchegger (Melliand Textilberichte 1984, 65, 573-574) ein "neues Verfahren zur Charakterisierung von Celluloseregeneratfasern" ein.

Die Autoren erstellten ein Diagramm, das die Fasereigenschaften auf der Grundlage von zwei berechneten Faktoren widerspiegelt, die auf zwei Achsen aufgetragen werden und das sogenannte "Höller-Diagramm" erzeugen, wobei sich verschiedene Fasertypen in unterschiedlichen Bereichen abgrenzen lassen.

Die mechanischen Eigenschaften von Textilfasern, die diese beiden Faktoren generieren, sind in der Fachwelt bekannt und können nach BISFA "Prüfverfahren Viskose, Modal, Lyocell und Acetat Stapelfasern und Seile" Ausgabe 2004, Kapitel 7, gefunden und getestet werden.

Die beiden Höller-Faktoren *F1* und *F2* werden wie nachfolgend beschrieben berechnet:

$$F1 = -1{,}109 + 0{,}03992 * FFk - 0{,}06502 * FDk + 0{,}04634 * FFn - 0{,}04048 * FDn + 0{,}08936 * BISFA\text{-}Modul + 0{,}02748 * SFk + 0{,}02559 * KFk \ ,$$

und

$$F2 = -7{,}070 + 0{,}02771 * FFk + 0{,}04335 * FDk + 0{,}02541 * FFn + 0{,}03885 * FDn - 0{,}01542 * BISFA\text{-}Modul + 0{,}2891 * SFk + 0{,}1640 * KFk \ ,$$

wobei

*FFk* die Faserfestigkeit im konditionierten Zustand,
*FDk* die Faserdehnung im konditionierten Zustand,
*FFn* die Faserfestigkeit im nasssen Zustand,
*FDn* die Faserdehnung im nassen Zustand,
*BISFA-Modul* der Nassmodul bei 5% Dehnung,
*SFk* die Schlingenfestigkeit im konditionierten Zustand,
*SDk* die Schlingendehnung im konditionierten Zustand, und
*KFk* die Knotenfestigkeit im konditionierten Zustand sind.

Laut Lenzinger Berichte 2013, 91, 07-12*,* können im Höller-Diagramm Fasern aus verschiedenen Produktionsprozessen, z.B. direkte Auflösung vs. Derivatisierung, klar voneinander unterschieden werden. Auch bei den Fasertypen mit direkter Auflösung fallen Fasern, die aus verschiedenen direkten Lösungsmitteln hergestellt werden, in unterschiedliche Bereiche - z.B. Fasern, die aus Lösungen in ionischen Flüssigkeiten gesponnen werden oder andererseits NMMO.

Handelsübliche Lyocellfasern (nicht vernetzt) weisen Höller-*F1*-Werte zwischen 2 und 3 und Höller-F2-Werte zwischen 2 und 8 auf (WO 2015/101543 und Lenzinger Berichte 2013, 91, 07-12*)*. Die aus direkten Lösungen in ionischen Flüssigkeiten gewonnenen Fasern decken einen Bereich von Höller-*F1*-Werten zwischen 3 und 5,5 und Höller-F2-Werten zwischen 7 und 10,5 ab (Lenzinger Berichte 2013, 91, 07-12). WO 2015/101543 veröffentlicht einen neuen Lyocellfasertyp mit Höller-*F2*-Werten in einem unteren Bereich zwischen 1 und 6 und Höller-*F1*-Werten zwischen -0,6 und einem rechten oberen Rand, der durch $F2 - 4{,}5 * F1 \geq 1$, insbesondere $\geq 3$ definiert ist.

Daher beschreibt WO 2015/101543 eine (unvernetzte) Lyocellfaser mit einer bestimmten Position im Höller-Diagramm. Die beanspruchten Lyocellfasern wurden aus Mischungen von hochwertigen Holzzellstoffen mit hohem $\alpha$-Gehalt und niedrigem Nichtzellulosegehalt, wie Hemicellulosen, hergestellt, um eine spezifische Molekulargewichtsverteilung und optimierte Spinnparameter zu erreichen. Der Luftspalteinfluss wird reduziert, das Spinnen erfolgt bei hohen Temperaturen und unter Einsatz von niedrigerem Verzug. Diese Faser zeichnet sich durch eine erhöhte Nass-Scheuerfestigkeit aus, obwohl sie nicht vernetzt ist.

Weitere Formen von unvernetzten Lyocell-Fasern in anderen Bereichen des Höller-Diagramms sind in WO 2019/170670 A1 offenbart.

Die erfindungsgemäßen Fasern weisen bei Titern von 1,2 dtex bis 1,5 dtex Höller-Faktoren von $F1 \geq 2{,}1$ und $F2 \geq 3{,}0$ auf und bei Titern von 0,6 dtex bis 1,2 dtex Höller-Faktoren von $F1 \geq 2{,}8$ und $F2 \geq 3{,}0$ auf. Eine vernetzte Lyocell-Faser mit so hohen Höller-Faktoren *F1* und *F2*, bezogen auf die jeweiligen Titer, wurde bislang nicht beschrieben.

In der folgenden Tabelle 1 sind für einige Beispiele von Lyocell-Fasern A-H Werte für die zur Ermittlung der Höller-Faktoren relevanten textilen Parameter zusammengestellt.

Tabelle 1:

| **Faser** | **A** | **B** | **C** | **D** | **E** | **F** | **G** | **H** |
|---|---|---|---|---|---|---|---|---|
| Verfahren und Vernetzer | Kabel (andere) | Kabel (NHDT) | Vlies (NHDT) | Vlies (NHDT) | - | - | Erfind. (NHDT) | Erfind. (NHDT) |
| Titer [dtex] | 1,47 | 1,34 | 1,36 | 0,93 | 1,36 | 0,98 | 1,38 | 0,92 |
| FFk. [cN/tex] | 35,9 | 36,6 | 32,9 | 31,7 | 37,5 | 41,1 | 39,6 | 44,5 |
| FDk. [%] | 10,2 | 9,9 | 9,3 | 7,9 | 12,3 | 15,6 | 10,1 | 11,2 |
| FFn. [cN/tex] | 23,9 | 24,6 | 25,8 | 27,6 | 30,9 | 39,2 | 27,4 | 35 |
| FDn. [%] | 10,4 | 10,5 | 11,9 | 11 | 16,3 | 20,1 | 10,9 | 11,9 |
| BISFA-Modul [cN/tex/5%] | 10,7 | 10,6 | 9,7 | 10,4 | 9,6 | 10,2 | 11,4 | 14,2 |
| SFk. [cN/tex] | 9,3 | 10,2 | 12 | 12 | 16,3 | 23 | 15,5 | 14 |
| SDk. [%] | 1,5 | 1,4 | 2,4 | 2,8 | 3,7 | 6,1 | 2,8 | 1,9 |
| KFk. [cN/tex] | 18,7 | 19,3 | 21,4 | 20,7 | 28,1 | 33,4 | 26,2 | 26,5 |
| Höller Faktor F1 | 2 | 2,1 | 2,1 | 2,3 | 2,4 | 2,9 | 2,8 | 3,4 |
| Höller Faktor F2 | 0,9 | 1,4 | 2,2 | 2 | 5,1 | 8,5 | 4,2 | 4,2 |

Faser A ist eine kommerziell erhältliche vernetzte Faser, hergestellt nach der herkömmlichen Kabelnachbehandlung mit mechanischem Crimp, welche mit einem vom für die Herstellung der erfindungsgemäßen Faser verwendeten Vernetzer unterschiedlichen Vernetzer behandelt wurde.

Faser B ist eine kommerziell erhältliche vernetzte Lyocell-Faser, welche mit dem gleichen Vernetzer behandelt wurde wie die erfindungsgemäße Faser. Faser B wurde aber ebenfalls nach der Kabelnachbehandlung hergestellt.

Faser C ist eine nach der Vliesnachbehandlung hergestellte und mit dem gleichen Vernetzer wie die erfindungsgemäße Faser behandelte Faser, welche kommerziell erhältlich ist.

Faser D ist eine ebenso wie Faser C nach der Vliesnachbehandlung hergestellte und mit dem gleichen Vernetzer wie die erfindungsgemäße Faser behandelte Mikrofaser, welche sich von Faser C maßgeblich durch ihren geringeren Titer unterscheidet.

Als weiterer Vergleich wurde Faser E, eine unvernetzte Lyocell-Standardfaser, angeführt. Aus diesem Vergleich lässt sich ableiten, welchen Einfluss der Vernetzungsprozess auf die textilen Parameter hat.

Ebenso wurde Faser F, eine unvernetzte Lyocell-Mikrofaser, angeführt. Auch diese Faser eignet sich zum Vergleich mit vernetzten Mikrofasern bzw. zur Ermittlung des Einflusses des Vernetzungsprozesses auf die textilen Parameter von Mikrofasern.

Die obige Tabelle 1 zeigt die Höller-Faktoren der erfindungsgemäßen Fasern G und H. Dabei ist Faser G eine Faser mit einem Titer im Bereich der nicht erfindungsgemäßen Fasern A, B, C und E. Faser H ist eine Mikrofaser mit einem Titer im Bereich der nicht erfindungsgemäßen Fasern D und F. Die Höller-Faktoren der erfindungsgemäßen Fasern sind gemäß Tabelle 1 sehr unterschiedlich zu den Höller-Faktoren der anderen vernetzten Lyocell-Fasern A-D, sowie zu den Höller-Faktoren der unvernetzten Lyocell-Fasern E und F, insbesondere auch im Vergleich mit Fasern im jeweils gleichen Titerbereich.

Grafisch sind die Unterschiede in den Höller-Faktoren *F1* und *F2* noch deutlicher aus Figur 3 ersichtlich, in welcher Ergebnisse zahlreicher Messungen an Fasern der Typen A bis H dargestellt sind.

Die erfindungsgemäßen Fasern weisen somit eine sehr hohe Festigkeit auf.

Vor allem bei der herkömmlichen Vliesnachbehandlung baut die Faserfestigkeit durch Schädigung während der Vernetzungsreaktion stark ab, wie anhand von Faser C und D gezeigt wurde. Die Schädigung tritt aufgrund von hydrolytischer Spaltung der Celluloseketten auf. Die dadurch entstehenden kürzeren Ketten reduzieren die Faserfestigkeit.

Nach der Kabelnachbehandlung hergestellte Fasern haben umgekehrt neben dem fehlenden permanenten Crimp unabhängig von der Vernetzerchemie den Nachteil, dass die Faser sehr spröde wird. Dies ist anhand der geringeren Schlingen- und Knotenfestigkeiten der Fasern A und B ersichtlich. Hier liefern die erfindungsgemäßen Fasern G und H ausgezeichnete Werte, das heißt, das Problem der Versprödung tritt nicht auf, was sich in einem deutlich höheren Höller Faktor *F2* auswirkt.

Der Höller Faktor *F1* erhöht sich vor allem auch gegenüber den Standardfasern (Fasern E und F), da die Gewichtung der Faserdehnung im trockenen und nassen Zustand (*FDk*, *FDn*) bei diesem negativ ist. Vor allem die Nassdehnung (*FDn*) nimmt durch die Vernetzung der Faser stark ab.

Zusätzlich ist auch die Schlingendehnung (*SDk*) von Bedeutung. Eine niedrige Schlingendehnung ist ebenso gleichbedeutend mit einer spröden Faser. Spröde Fasern führen zu schlechterer Verarbeitbarkeit, u.a. durch Staubbildung im Garnspinnprozess.

Die erfindungsgemäßen Fasern sind auch hinsichlich ihrer Faserdehnung in konditioniertem Zustand (*FDk*) einer kommerziell erhältlichen, mit NHDT vernetzten Lyocellfaser überlegen. Bevorzugt beträgt die Faserdehnung in konditioniertem Zustand (*FDk*) der erfindungsgemäßen Fasern 10% und mehr, besonders bevorzugt 10% bis 11%.

In Folge dieser Eigenschaften weisen die erfindungsgemäßen Fasern bevorzugt ein Arbeitsvermögen von 380 %*cN/tex und mehr auf. Das Arbeitsvermögen, dargestellt in Tabelle 2, ergibt sich aus der Multiplikation von Faserfestigkeit *FFk* [cN/tex] und Dehnung *FDk* [%].

Tabelle 2:

| **Faser** | **A** | **B** | **C** | **D** | **E** | **F** | **G** | **H** |
|---|---|---|---|---|---|---|---|---|
| Verfahren und Vernetzer | Kabel (andere) | Kabel (NHDT) | Vlies (NHDT) | Vlies (NHDT) | - | - | Erfind. (NHDT) | Erfind. (NHDT) |
| Titer [dtex] | 1,47 | 1,34 | 1,36 | 0,93 | 1,36 | 0,98 | 1,38 | 0,92 |
| FFk. [cN/tex] | 35,9 | 36,6 | 32,9 | 31,7 | 37,5 | 41,1 | 39,6 | 44,5 |
| FDk. [%] | 10,2 | 9,9 | 9,3 | 7,9 | 12,3 | 15,6 | 10,1 | 11,2 |
| Arbeitsvermögen [%cN/tex] | 366 | 362 | 306 | 250 | 460 | 641 | 400 | 498 |

Im Vergleich mit kommerziell hergestellten, mit NHDT vernetzten Fasern weisen die erfindungsgemäßen Fasern bei gleicher Einsatzmenge an Vernetzungsmittel auch einen erhöhten Stickstoffgehalt auf, d.h. die Effizienz der Vernetzungsreaktion ist höher.

Die erfindungsgemäßen Fasern sind weiters bevorzugt gekennzeichnet durch eine Nassscheuerfestigkeit *(NSF)* von 300 Umdrehungen/dtex (U/dtex) oder mehr, bevorzugt 400 U/dtex oder mehr, besonders bevorzugt 450 U/dtex oder mehr. Eine unvernetzte Lyocell-Faser weist eine NSF von etwa 40 bis 80 U/dtex auf.

Der Gehalt G an Vernetzungsmittel in mol pro 1 kg Cellulose atro in der erfindungsgemäßen Faser genügt bevorzugt folgender Formel:

$$G \times R = 0{,}10 - 0{,}45,$$

bevorzugt 0,10 - 0,35, besonders bevorzugt 0,20 -0,35,
wobei R wie bereits oben definiert die Anzahl an reaktiven Gruppen im Vernetzungsmittel bedeutet.

Insbesondere bevorzugt beträgt der Gehalt des Vernetzungsmittels der Verbindung der Formel (I) 2,0-3,0 Gew.% bezogen auf Cellulose atro.

Die vorliegende Erfindung betrifft auch ein Faserbündel, enthaltend zumindest 20 kg einer erfindungsgemäßen Lyocell-Stapelfaser. Damit stellt die vorliegende Erfindung die erfindungsgemäße Faser in kommerziellen Mengen zur Verfügung.

Solche Mengen an Lyocell-Stapelfaser wären mit einer Laboranlage mit nur einer oder nur wenigen Spinndüsen und insbesondere nur wenigen Spinnlöchern, wie sie zur wissenschaftlichen Forschung verwendet werden, nicht herstellbar.

Umgekehrt bestehen natürlich zwischen einer solchen Laboranlage und einer kommerziellen Herstellung deutliche Unterschiede bei der Frage der Herstellbarkeit von Fasern mit bestimmten textilen Parametern.

Die vorliegende Erfindung betrifft auch einen textilen Artikel, enthaltend eine erfindungsgemäße Lyocell-Stapelfaser.

Bevorzugt liegt der textile Artikel in Form eines Garns vor. Auch zur Herstellung eines Garns ist jedenfalls eine Menge an Fasern, also zumindest einige kg Faser, erforderlich, die mit einer Laboranlage, wie oben beschrieben, nicht herstellbar wäre.

Exemplarisch werden in der folgenden Tabelle 3 die Garndaten zweier Faserballen (Vergleichsballen 1 und 2) einer kommerziell produzierten Faser C im Vergleich zu je einem Ballen der erfindungsgemäßen Faser G, hergestellt nach den weiter unten angegebenen Beispielen 2 bzw. 5, dargestellt.

Tabelle 3:

| **Beispiel** | **Vergleichs-ballen 1** | **Vergleichs-ballen 2** | **Beispiel 2** | **Beispiel 5** |
|---|---|---|---|---|
| Dünnstellen [-50%/km] | 2 | 5 | 1 | 0 |
| Dickstellen [+50%/km] | 18 | 28 | 15 | 8 |
| Nissen [+140% /km] | 161 | 225 | 151 | 106 |
| Nissen [+200% /km] | 32 | 34 | 37 | 23 |
| Festigkeit [cN/tex] | 21 | 20,2 | 26,8 | 24,2 |
| Dehnung [%] | 7 | 6,6 | 8,1 | 7,9 |
| Staub [ppm] | 500 | 460 | 254 | 135 |

Neben den höheren Garnfestigkeiten und Garndehnungen ergibt sich bei den Ballen aus erfindungsgemäßer Faser eine verbesserte Produktqualität anhand der geringeren Anzahl von Dick- und Dünnstellen sowie Nissen. Auch der Staubwert ist aufgrund der beschriebenen reduzierten Sprödigkeit der Faser reduziert. Die Verarbeitbarkeit der Faser an der Garnspinnmaschine verbessert sich dadurch.

DETAILLIERTE BESCHREIBUNG DER FIGUREN

Figur 1 ist ein Blockschema der Verfahrensschritte, wie sie zur Herstellung einer bevorzugten Ausführungsform der erfindungsgemäßen Fasern durchgeführt werden. Die erste Wäsche der Fasern (zur Entfernung des Lösungsmittels) und das In-Kontakt-Bringen der Fasern mit dem Vernetzungsmittel, sowie die Reaktion mit dem Vernetzungsmittel, erfolgt noch in Form von (endlosen) Cellulosefilamenten, also in Kabelform. Erst nach der Vernetzerwäsche werden die Cellulosefilamente zu Stapelfasern geschnitten. Nachfolgend werden die einzelnen Schritte chronologisch angeführt:

1) Herstellung der Spinnmasse;
2) Faserspinnen umfassend Extrudieren von Filamenten aus einer Lösung von Cellulose in einem organischen Lösungsmittel und Ausfällen der Cellulose zur Bildung von endlosen Cellulosefilamenten;
3) Waschen der Cellulosefilamente mittels Kabelwäsche;
4) Imprägnierung durch In-Kontakt-Bringen der Cellulosefilamente mit einem Vernetzungsmittel;
5) Reaktion der Cellulosefilamente mit dem Vernetzungsmittel in einer Reaktionskammer;
6) Vernetzerwäsche durch Waschen der behandelten Cellulosefilamente;
7) Schneiden der gewaschenen Cellulosefilamente zu Stapelfasern;
8) Bildung eines Faservlieses aus den Stapelfasern;
9) Entwässerung durch Abpressen des Faservlieses;
10) Avivierung des Faservlieses und erneutes Abpressen des Faservlieses;
11) Trocknung;
12) Herstellung eines Faserballens.

Figur 2 zeigt eine polarisationsmikroskopische Aufnahme einer bevorzugten Ausführungsform einer erfindungsgemäßen Lyocell-Stapelfaser (Beispiel 1 aus Tabelle 4, unten). Mittels linear polarisiertem Licht werden die unregelmäßigen Quetschstellen sichtbar gemacht, welche auch an der getrockneten Faser während des Garnspinnens erhalten bleiben. Als "permanenter Crimp" wird analog zur WO 97/14829 das Vorhandensein von durchschnittlich mindestens zwei Quetschstellen pro Millimeter Filamentlänge verstanden. Die Fasern in Figur 2 weisen die geschätzte Eigenschaft des "permanenten Crimps" auf, welche durch die abschließenden Verfahrensabschritte h) und i) des erfindungsgemäßen Verfahrens entstehen (bzw. der Schritte 9-11 aus Fig. 1). Der Mikrocrimp der Lyocell-Stapelfaser aus Figur 2 betägt 107/2cm.

Figur 3 zeigt ein Höller Diagramm 50 mit einer Gegenüberstellung der Höller-Faktoren *F1* und *F2* von Lyocellfasern des Standes der Technik und bevorzugten Ausführungsformen der erfindungsgemäßen Lyocell-Stapelfasern.

Das Diagramm 50 ist ein Ergebnis von Messungen an Fasern der Typen Faser A bis Faser H. Hier sei auf Tabelle 1 und die dazugehörige Beschreibung der Fasern A bis H verwiesen. Die Achsen 51 und 52 tragen dabei jeweils die Höller-Faktoren *F1* und *F2* auf. Das Diagramm 50 lässt sich dann in mehrere Bereiche 53 bis 58 unterteilen, wobei Bereich 53 die Punkte der Fasern A und B, Bereich 54 die Punkte der Fasern C und D, Bereich 55 die Punkte der Faser E und Bereich 56 die Punkte der Faser F umfasst. Die erfindungsgemäßen Fasern G (Bereich 57) und H (Bereich 58) sind von den anderen Bereichen 53 bis 56 deutlich abgegrenzt.

BEISPIELE

Beispiele 1-5

Cellulose-Endlosfilamente wurden auf einer semikommerziellen Pilotanlage auf an sich bekannte Weise zu einem Faserkabel gesponnen und mittels Kabelwäsche kontinuierlich NMMO-frei gewaschen. Nach der Kabelwäsche erfolgte eine Abpressung des Faserkabels, um die Verschleppung von Waschwasser in das nachfolgende Imprägnierbad zu minimieren. Das Imprägnierbad enthielt den Vernetzer (NHDT) und wurde kontinuierlich mit Vernetzer aus einem Starkbad aufgestärkt. Nach dem In-Kontakt-Bringen mit dem Vernetzungsmittel wurde in einem weiteren Bad die Natronlauge aufgebracht. Auch das Natronlaugebad wurde kontinuierlich mit Natronlauge aufgestärkt, um eine geeignete Konzentration über längere Zeit konstant zu halten.

Zur Reduktion von Nebenreaktionen wurde dieses Bad auf 10 °C abgekühlt. Nachfolgend wurde das so modifizierte Faserkabel in eine Dampfkammer geführt, welche in Form einer J-Box ausgeführt war.

Die Verweilzeit konnte mittels entsprechender Markierung am Kabel und einer Stoppuhr gemessen werden.

Das Faserkabel wurde aus der J-Box herausgezogen und einer Vernetzerwäsche zugeführt, um überschüssige Chemikalen zu entfernen. Daraufhin wurde das Kabel einem Schneidturm zugeführt, um Stapelfasern zu formen. Die Faserstapeln wurden mit Wasser abgeschwemmt und einer Vliesbildung zugeführt. Nach der Ausformung des Vlieses wurde das Vlies abgepresst und einer Avivage zugeführt. Das avivierte Vlies wurde nochmals abgepresst, von einem Vlieszerleger geöffnet, in einem geeigneten Trockner zu einer fertigen Faser getrocknet und danach einer Ballenpresse zugeführt.

In der folgenden Tabelle 4 sind Versuchsparameter von einigen Versuchen (Beispiele 1-5) zur Herstellung erfindungsgemäßer Fasern mit Titern im Bereich von ca. 1,35 dtex zusammengefasst. Die Versuche zeigen den Einfluß der verschiedenen wesentlichen Produktionsparameter NHDT-Dosierung, Laugebadkonzentration und Verweilzeit.

Tabelle 4:

| **Beispiel** | **1** | **2** | **3** | **4** | **5** |
|---|---|---|---|---|---|
| **Produktionsparameter:** | | | | | |
| Produzierte Fasermenge [kg/h] | 56 | 75 | 64,4 | 61,3 | 61,3 |
| NHDT Dosierung [kg/h] | 4,4 | 5,0 | 4,2 | 4,6 | 4,6 |
| Konzentration Laugebad [g/l] | 15 | 17 | 14 | 11 | 12,5 |
| Verweilzeit [min] | 19 | 12 | 18 | 18 | 18 |
| Stickstoffauflage [%] | 0,636 | 0,477 | 0,589 | 0,629 | 0,592 |
| $G \times R$ [mol/kg] | 0,303 | 0,227 | 0,280 | 0,300 | 0,282 |
| **Textile Parameter:** | | | | | |
| Fasertiter [dtex] | 1,40 | 1,38 | 1,41 | 1,32 | 1,32 |
| Festigkeit [cN/tex] | 39 | 38,4 | 38,7 | 38,2 | 38,5 |
| Dehnung [%] | 10,5 | 10,2 | 10,8 | 10,6 | 9,9 |
| Mikrocrimp [#/2cm] | 107 | 89 | 95 | 117 | 102 |
| *NSF* [U/dtex] | 612 | 538 | 435 | 570 | 665 |
| $CV_{NSF}$ [%] | 28 | 33 | 35 | 41 | 42 |

In Beispiel 2 wurde durch Erhöhung der Produktionsgeschwindigkeit die Verweilzeit gesenkt. Es zeigt sich, dass gleichermaßen eine vernetzte Faser produziert werden kann, allerdings wird eine geringere Stickstoffauflage erreicht.

Die nachfolgende Tabelle 5 zeigt wiederum Versuchsparameter von einigen Versuchen (Beispiele 6-8) zur Herstellung erfindungsgemäßer Mikrofasern mit Titern im Bereich von ca. 0,9 dtex. Die Produktionsparameter NHDT-Dosierung, Laugebadkonzentration und Verweilzeit blieben bei den Versuchen im Wesentlichen konstant. Die Versuchsdaten zeigen somit die natürliche, produktionsbedingte Streuung der textilen Parameter der Fasern, die durch das

erfindungsgemäße Verfahren hergestellt wurden.

Tabelle 5:

| **Beispiel** | **6** | **7** | **8** |
|---|---|---|---|
| **Produktionsparameter:** | | | |
| Produzierte Fasermenge [kg/h] | 45 | 45 | 45 |
| NHDT Dosierung [kg/h] | 4,9 | 4,9 | 4,9 |
| Konzentration Laugebad [g/l] | 13,7 | 14 | 14,1 |
| Verweilzeit [min] | 18 | 17,5 | 18 |
| Stickstoffauflage [%] | 0,620 | 0,634 | 0,635 |
| $G \times R$ [mol/kg] | 0,303 | 0,227 | 0,280 |
| **Textile Parameter:** | | | |
| Fasertiter [dtex] | 0,95 | 0,92 | 0,92 |
| Festigkeit [cN/tex] | 45,4 | 43,8 | 44,5 |
| Dehnung [%] | 12,5 | 10,7 | 11,2 |
| *NSF* [U/dtex] | 471 | 425 | 413 |
| $CV_{NSF}$ [%] | 33 | 38 | 44 |

Alle Beispiele 1-8 zeigen unabhängig vom Titer der hergestellten Fasern, dass der Variationskoeffizient der Nassscheuerfestigkeit $CV_{NSF}$ jeweils unter 45 % liegt, bzw. in der Mehrheit der Beispiele sogar unter 40 % liegt.

Die erfindungsgemäße Technologie ist prinzipiell auch für verschiedene andere Modifikationen an einem Faserstrang geeignet, wie zum Beispiel für die Aufbringung eines Reaktivfarbstoffes und nachfolgende Vernetzung desselben.

Die erfindungsgemäße Technologie eignet sich aber auch ganz allgemein zum Aufbringen anderer Modifikationsmittel als Vernetzungsmittel, wie z.B. Chitosan (WO 2010/031091 A1).

Abgesehen vom oben beschriebenen Vernetzungsmittel NHDT können auch andere Vernetzungsmittel wie die in den oben dazu genannten Dokumenten beschriebenen Vernetzungsmittel, oder auch andere Reaktivharze, beispielsweise Ein- oder Mehrkomponentensysteme, die durch den Einfluß von Luftfeuchtigkeit, Sauerstoff oder Temperatur aushärten, insbesondere Epoxide, Acrylate, Polyurethane und ähnliche Verbindungen, eingesetzt werden. Insbesondere lassen sich die notwendigen Bedingungen für die Applikation der Chemikalien sehr leicht anpassen. Das Imprägnierbad kann zum Beispiel auch geheizt werden. Ebenso kann die Reaktionskammer auf die jeweils notwendigen Temperaturen oder Verweilzeiten ausgelegt werden.

## Testmethoden

### *Bestimmung der Nassscheuerfestigkeit (NSF)*

Die Nassscheuerfestigkeit *(NSF)* ist eine Kennzahl für die Beständigkeit der Faser gegenüber Fibrillation. Diese Kennzahl wurde nach der Nassabriebmethode, welche in "Zur Fasernassscheuerung von Viskosefasern", Faserforschung and Textiltechnik 19 (1968), Ausgabe 10, Seite 447-452, beschrieben ist, ermittelt. Dabei rotieren die Fasern auf einer feuchten Rolle und werden abgerieben. Die Anzahl der Umdrehungen bis zum Durchreißen der Faser wird bestimmt.

Die Scheuerfestigkeit von über ein Vorspanngewicht vorgespannten Einzelfasern im nassen Zustand wird mittels einem rotierenden und mit einem Filamentschlauch (Viscosefilamentstrumpf) bezogen Stahlschaft ermittelt. Die Anzahl der Umdrehungen bis zum Durchscheuern und Abreissen der Faser werden gezählt und auf den jeweiligen Fasertiter bezogen.

Zur Kalibrierung der Messung, bzw. zur Sicherstellung dass ein Verschleiß am Filamentstrumpf nicht die Messung beeinflusst, wird in regelmäßigen Abständen, insbesondere zumindest täglich, die Nassscheuerfestigkeit einer Kalibrierfaser bestimmt. Die Kalibriermessungen sollten dabei vorzugsweise nicht mehr als 20 % vom Langzeitmittelwert aller Kalibriermessungen mit neuem Filamentstrumpf abweichen, ansonsten ist der Filamentstrumpf zu tauschen. Im Rahmen der gegenständlichen Erfindung wurden zur Kalibrierung mit TAHT vernetzte Lyocell-Stapelfasern (beispielsweise hergestellt nach einem Verfahren wie in WO 95/28516 beschrieben) des Typs LENZING™ Lyocell A100 der Firma Lenzing AG, Werkstraße 2, A-4860 Lenzing mit einem Titer von 1,3 dtex verwendet. Der Langzeitmittelwert der *NSF* aller Kalibriermessungen dieser Faser lag bei 471 U/dtex.

Die Nassscheuerfestigkeit wurde mittels des Geräts "Delta 100" von Lenzing Instruments bestimmt. Der Stahlschaft wurde während der Messung kontinuierlich in Längsrichtung bewegt, um Kerben im Filamentschlauch zu vermeiden.

Die Bezugsquelle für den Filamentschlauch (Viskosefilamentstrumpf) war: VOM BAUR GmbH & KG. Markstraße 34, D-42369 Wuppertal.

Aus 20 Faserbüscheln wird jeweils eine Faser mit einer Länge von 38 mm auf dem Stahlschaft mit einer Dicke von 1 cm plaziert und mit dem Vorspanngewicht belastet. Der mit dem Filamentschlauch bezogene Stahlschaft wird während der Rotation kontinuierlich befeuchtet. Der Stahlschaft wird bei der Messung mit einer Geschwindigkeit von 500 Umdrehungen pro Minute gedreht und gleichzeitigdiagonal zur Faserachse rückwärts und vorwärts bewegt, wodurch eine Pendelbewegung von etwa 1 cm entsteht.

Die Anzahl der Umdrehungen bis die Fasern durchreißen und das Vorspanngewicht einen Kontakt berührt, wurden bestimmt. Nach 5000 Umdrehungen wird die Messung in jedem Fall abgebrochen, um verfälschte Messwerte zu vermeiden. Die gemessene Nassscheuerfestigkeit *NSF* ergibt sich als Mittelwert über alle 20 Messungen der Anzahl der Umdrehungen dividiert durch den jeweiligen Fasertiter in [U/dtex].

Testparameter:

Wasserflussrate: 8,2 mL/min
Rotationsgeschwindigkeit: 500 U/min
Abriebwinkel: 40 °
Vorspanngewicht: 50 mg

200 U/dtex oder mehr, besonders 400 U/dtex oder mehr stellen eine kaum fibrillierende (low fibrillating, LF) Faser bzw. eine Faser die widerstandsfähig gegen Fibrillation in konventionellen Nassprozessen ist, dar.

*Bestimmung des Variationskoeffizienten $CV_{NSF}$ der Nassscheuerfestigkeit*

Unter dem $CV_{NSF}$ der Lyocell-Stapelfaser im Sinne der Erfindung wird das Verhältnis zwischen der Standardabweichung $\sigma_{NSF}$ und dem Erwartungswert $\mu_{NSF}$ der Nasscheuerfestigkeit *(NSF)* verstanden:

$$CV_{NSF} = \sigma_{NSF} / \mu_{NSF} .$$

Da zur Ermittlung der Nassscheuerfestigkeit lediglich Messungen an Proben mit begrenzter Stichprobengröße herangezogen werden können, wird als Approximation zum Erwartungswert $\mu_{NSF}$, der Mittelwert über die Messungen der Stichprobe *NSF** herangezogen. Der approximierte $CV^*_{NSF}$ wird somit durch Normalisierung der Standardabweichung $s_{NSF}$ mit dem Mittelwert *NSF** erhalten:

$$CV^*_{NSF} = s_{NSF} / NSF^* \ .$$

Für Stichprobengrößen $n \to \infty$ konvergiert der aus der Stichprobe ermittelte $CV^*_{NSF}$ gegen den aus dem Erwartungswert bestimmten $CV_{NSF}$.

Bei unzureichend kleiner Stichprobengröße, bzw. bei ungeeigneter Wahl der Stichprobe - etwa wenn Fasern nur aus einer Stelle der Probe entnommen werden - kann der ermittelte $CF^*_{NSF}$ somit deutlich vom $CV_{NSF}$ abweichen.

Zur Ermittlung eines aussagekräftigen Werts des Variationskoeffizienten $CV_{NSF}$ einer Lyocell-Stapelfaser sollte demgemäß eine ausreichend große Stichprobe an Fasern aus einer hinreichend großen Probe (beispielsweise einem Faserballen) zur Ermittlung der jeweiligen *NSF* herangezogen werden. Dazu werden bevorzugt Faserbüschel aus jeweils verschiedenen Stellen einer Probe entnommen und die *NSF* jeweils einer einzelnen Faser aus dem Faserbüschel - wie zuvor beschrieben - ermittelt. Auf diese Weise wird mit zumindest 20 Faserbüscheln aus unterschiedlichen Stellen des Ballens verfahren und der Mittelwert *NSF** sowie der Variationskoeffizient $CV^*_{NSF}$ aus diesen 20 Messungen ermittelt.

Zur Kontrolle wird eine weitere Stichprobe von Fasern aus zumindest 20 unterschiedlichen Faserbüscheln, welche wiederum unabhängig von den zuvor ausgewählten Faserbüscheln aus der Probe entnommen wurden, untersucht. Der Mittelwert *NSF** und der Variationskoeffizient $CV^*_{NSF}$ werden dann aus sämtlichen zuvor bestimmten NSF-Werten aller Stichproben berechnet. Weicht der so ermittelte Mittelwert *NSF** oder der Variationskoeffizient $CV^*_{NSF}$ von den zuvor für die erste Stichprobe ermittelten Werten um mehr als 10 %, insbesondere um mehr als 5 % ab, so muss gemäß dem beschriebenen Prozedere weiter verfahren werden, bis eine hinreichende Konvergenz der ermittelten Werte erreicht wird.

Je nach Homogenität des zu untersuchenden Probe, kann auf diese Weise zur Ermittlung des Variationskoeffizienten eine Gesamtstichprobe von mehr als 100, in manchen Fällen von mehr als 1000 Fasern notwendig sein.

*Stickstoffanalysator zur Bestimmung der Stickstoffauflage durch Verglühen der Probe*

Die Bestimmung der Stickstoffauflage auf der Faser erfolgt mittels Messung des N-Gehaltes (z.B. mittels LECO FP 328 Stickstoffanalyser) durch Verglühen der Probe. Darüber kann die Menge des Vernetzers bestimmt werden.

*Auszählung von Mikrocrimp*

Aus einer Faserprobe, die aus einem Faserballen entnommen wurde, wurden an verschiedenen Stellen Fasern entnommen, um eine Mischprobe zu erhalten. Auf einen Objektträger wurde ein Tropfen Glycerin gegeben, in welchem einige Einzelfasern aus der Mischprobe möglichst gerade platziert wurden. Es wurde ein Deckglas auf den einige Einzelfasern enthaltenden Tropfen Glycerin gelegt. Der Objektträger wurde unter einem Polarisationsmikroskop platziert. Der Mikrocrimp wurde im Bereich des Deckglases (2x2 cm) gezählt.

*Staubprüfung (Garn)*

Staubbildung im Garnspinnprozess wird beispielsweise durch spröde Fasern und deren schlechtere Verarbeitbarkeit ausgelöst. Die Messung der Staubbildung erfolgte auf einer Pilotanlage. Die zu testenden Fasern wurden umgespult. Es wurden etwa 500 g Garn bei einer Spulengeschwindigkeit von 1000 m/min umgespult. Die umgespulte Garnmenge wurde auf 1 mg genau bestimmt. Der dabei entstehende Faserstaub wurde gesammelt und mittels Analysenwaage auf 0,1 mg genau gewogen. Die Faserstaubmenge beschreibt den mechanischen Schädigungsgrad der Faser während der Verarbeitungsprozesse in der Garnspinnerei. Je höher die Menge an Staub [ppm], umso empfindlicher ist die Faser in der Verarbeitung.

Zur Berechnung wurde folgende Formel herangezogen:

$$\text{Staub in ppm} = (\text{gewogenener Faserstaub [g]} * 1.000.000) / \text{umgespulte Garnmenge [g]}$$

Beispielsweise: 97,83 ppm = (0,0520 g * 1.000.000) / 531,512 g

*Dünn-/Dickstellen und Nissen*

Garne können verschiedene Unregelmäßigkeiten an der Oberfläche aufweisen, wie beispielsweise Dünnstellen, Dickstellen und Nissen. Die Prüfung auf Dünn- und Dickstellen, sowie Nissen wurde anhand folgender Schritte durchgeführt. Das zu testende Garn wurde mittels eines USTER® Testers geprüft. Dieser verwendet eine kapazitive Methode, um die Variabilität im Gewicht eines Faserstranges zu bestimmen und damit Rückschlüsse auf Unregelmäßigkeiten an der Oberfläche zu ziehen. Anhand der ersten 100 m des Garnes wurde ein Mittelwert des Garngewichtes bestimmt. Die folgenden 1000 m des Garns wurden in 1 cm Stücken vermessen. Die Abweichung vom anfangs gemessenen Mittelwert wurde erfasst. Die Anzahl der Abweichungen (- 50 % für Dünnstellen / + 50 % für Dickstellen / + > 100 % für Nissen) wurde gezählt. Nissen sind Dickstellen, welche kürzer als 1 cm sind und Abweichung des Garngewichtes vom Mittelwert des Garngewichtes von > 100% aufweisen. Der USTER® Tester gibt üblicherweise an, wieviele Nissen mit Abweichungen von > 140 % bzw > 200 % auftreten (siehe Tabelle 3).

**Patentansprüche**

1. Verfahren zur Herstellung von Lyocell-Stapelfasern, umfassend die Schritte in folgender Reihenfolge:

   a) Extrudieren von Filamenten aus einer Lösung von Cellulose in einem organischen Lösungsmittel
   b) Ausfällen der Cellulose zur Bildung von endlosen Cellulosefilamenten
   c) Waschen der Cellulosefilamente
   d) In-Kontakt-Bringen der Cellulosefilamente mit einem Vernetzungsmittel
   e) Reaktion der Cellulosefilamente mit dem Vernetzungsmittel in einer Reaktionskammer
   f) Waschen der behandelten Cellulosefilamente
   g) Schneiden der gewaschenen Cellulosefilamente zu Stapelfasern

h) Bildung eines Faservlieses aus den Stapelfasern und Abpressen des Faservlieses
i) Avivierung des Faservlieses und Abpressen des Faservlieses.

2. Verfahren gemäß Anspruch 1, **dadurch gekennzeichnet, dass** die Filamente bzw. die Stapelfasern erstmals nach dem Schritt i) getrocknet werden.

3. Verfahren gemäß Anspruch 1 oder 2, **dadurch gekennzeichnet, dass** die Reaktion im Schritt e) unter Energiezufuhr durchgeführt wird.

4. Verfahren gemäß Anspruch 3, **dadurch gekennzeichnet, dass** die Reaktion im Schritt e) in Anwesenheit von Dampf durchgeführt wird.

5. Verfahren gemäß Anspruch 4, **dadurch gekennzeichnet, dass** der Schritt e) in einer Dampfkammer durchgeführt wird.

6. Verfahren gemäß einem der vorhergehenden Ansprüche, **dadurch gekennzeichnet, dass** die Dauer des Schritts e) 3 bis 30 Minuten, bevorzugt 10 Minuten bis 25 Minuten, besonders bevorzugt 15 bis 20 Minuten beträgt.

7. Verfahren gemäß einem der vorhergehenden Ansprüche, **dadurch gekennzeichnet, dass** das Vernetzungsmittel in einer Menge eingesetzt wird, sodass sich ein Gehalt G an Vernetzungsmittel in mol pro 1 kg Cellulose atro ergibt, welcher folgender Formel genügt:
G x R = 0,10 - 0,45, bevorzugt 0,10 - 0,35, besonders bevorzugt 0,20 - 0,35,
wobei R die Anzahl an reaktiven Gruppen im Vernetzungsmittel bedeutet.

8. Verfahren gemäß einem der vorhergehenden Ansprüche, **dadurch gekennzeichnet, dass** als Vernetzungsmittel eine Verbindung der Formel (I)

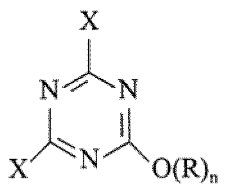 , (I)

wobei X Halogen, R=H oder einen ionischen Rest darstellt und n = 0 oder 1 ist, bzw. ein Salz dieser Verbindung, bevorzugt das Natriumsalz des 2,4-Dichlor-6-hydroxy-1.3.5-triazins, eingesetzt wird.

9. Verfahren gemäß Anspruch 8, **dadurch gekennzeichnet, dass** das Vernetzungsmittel der Verbindung der Formel (I) in einer Menge von 30 - 80 g, bevorzugt 45 - 60 g auf 1 kg Cellulose atro eingesetzt wird.

10. Lyocell-Stapelfaser, erhältlich durch ein Verfahren gemäß Anspruch 8 oder 9, **dadurch gekennzeichnet, dass** die Faser eine permanente Kräuselung und einen Variationskoeffizienten der Nassscheuerfestigkeit ($CV_{NSF}$) von kleiner gleich 50 %, insbesondere von kleiner gleich 45 %, aufweist.

11. Lyocell-Stapelfaser, erhältlich durch ein Verfahren gemäß Anspruch 8 oder 9, **gekennzeichnet durch** die Kombination folgender Eigenschaften:

- die Faser weist einen Titer von 1,2 dtex bis 1,5 dtex, bevorzugt 1,25 dtex bis 1,45 dtex, auf;
- die Faser weist eine permanente Kräuselung auf;
- die Faser weist eine Faserfestigkeit in konditioniertem Zustand von zumindest 36 cN/tex, bevorzugt 38 cN/tex bis 42 cN/tex auf;
- die Faser weist einen Höller-Faktor F1 $\geq$ 2,1, bevorzugt $\geq$ 2,4, besonders bevorzugt von 2,5 bis 3,2 auf;
- die Faser weist einen Höller-Faktor F2 $\geq$ 3,0, bevorzugt $\geq$ 3,5, besonders bevorzugt von 4,0 bis 5,5 auf.

12. Lyocell-Stapelfaser, erhältlich durch ein Verfahren gemäß Anspruch 8 oder 9, **gekennzeichnet durch** die Kombination folgender Eigenschaften:

- die Faser weist einen Titer von 0,6 dtex bis 1,2 dtex, bevorzugt von 0,7 dtex bis 1,15 dtex, besonders bevorzugt

von 0,8 bis 1,1 dtex, auf;
- die Faser weist eine permanente Kräuselung auf;
- die Faser weist eine Faserfestigkeit in konditioniertem Zustand von zumindest 40 cN/tex, bevorzugt von 42 cN/tex bis 49 cN/tex, besonders bevorzugt von 43,5 cN/tex bis 46 cN/tex, auf;
- die Faser weist einen Höller-Faktor F1 $\geq$ 2,8, bevorzugt $\geq$ 3,0, besonders bevorzugt von 3,2 bis 3,5 auf;
- die Faser weist einen Höller-Faktor F2 $\geq$ 3,0, bevorzugt $\geq$ 3,6, besonders bevorzugt von 3,9 bis 5,5 auf.

**13.** Lyocell-Stapelfaser gemäß Anspruch 11 oder 12, **dadurch gekennzeichnet, dass** sie einen Variationskoeffizienten der Nassscheuerfestigkeit (NSF CV) von kleiner gleich 50 %, insbesondere von kleiner gleich 45 %, aufweist.

**14.** Lyocell-Stapelfaser gemäß einem der Ansprüche 10 bis 13, **gekennzeichnet durch** eine Faserdehnung in konditioniertem Zustand von 10% oder mehr, bevorzugt 10% bis 11%.

**15.** Lyocell-Stapelfaser gemäß einem der Ansprüche 10 bis 14, **gekennzeichnet durch** eine Nassscheuerfestigkeit *(NSF)* von 300 U/dtex (Umdrehungen/dtex) oder mehr, bevorzugt 400 U/dtex oder mehr, besonders bevorzugt 450 U/dtex oder mehr.

**16.** Lyocell-Stapelfaser gemäß einem der Ansprüche 10 bis 15, **dadurch gekennzeichnet, dass** sie einen Gehalt G an Vernetzungsmittel in mol pro 1 kg Cellulose atro aufweist, welcher folgender Formel genügt:

$$G \times R = 0{,}10 - 0{,}45,$$

bevorzugt 0,10 - 0,35, besonders bevorzugt 0,20 - 0,35,
wobei R die Anzahl an reaktiven Gruppen im Vernetzungsmittel bedeutet.

**17.** Lyocell-Stapelfaser gemäß Anspruch 16, **dadurch gekennzeichnet, dass** der Gehalt des Vernetzungsmittels der Verbindung der Formel (I) 1,8 - 4.5 Gew.-%, bevorzugt 1,9 - 3,7 Gew.-%, besonders bevorzugt 2,0 - 3,0 Gew.%, bezogen auf Cellulose atro beträgt.

**18.** Faserbündel, enthaltend zumindest 20 kg einer Lyocell-Stapelfaser gemäß einem der Ansprüche 10 bis 17.

**19.** Textiler Artikel, enthaltend eine Lyocell-Stapelfaser gemäß einem der Ansprüche 10 bis 17.

**20.** Textiler Artikel gemäß Anspruch 19 in Form eines Garns.

## Claims

**1.** A method for the production of lyocell staple fibres, comprising the steps in the following order:

a) extruding filaments from a solution of cellulose in an organic solvent
b) precipitating the cellulose for the formation of continuous cellulose filaments
c) washing the cellulose filaments
d) contacting the cellulose filaments with a crosslinking agent
e) reacting the cellulose filaments with the crosslinking agent in a reaction chamber
f) washing the treated cellulose filaments
g) cutting the washed cellulose filaments into staple fibres
h) forming a nonwoven fleece from the staple fibres and pressing the nonwoven fleece
i) finishing the nonwoven fleece and pressing the nonwoven fleece.

**2.** A method according to claim 1, **characterized in that** the filaments or, respectively, the staple fibres are dried for the first time after step i).

**3.** A method according to claim 1 or 2, **characterized in that** the reaction in step e) is carried out with energy input.

**4.** A method according to claim 3, **characterized in that** the reaction in step e) is carried out in the presence of steam.

5. A method according to claim 4, **characterized in that** step e) is carried out in a steam chamber.

6. A method according to any of the preceding claims, **characterized in that** the duration of step e) is from 3 to 30 minutes, preferably from 10 minutes to 25 minutes, particularly preferably from 15 to 20 minutes.

7. A method according to any of the preceding claims, **characterized in that** the crosslinking agent is used in such an amount that it results in a content G of crosslinking agent in moles per 1 kg of cellulose atro, which complies with the following formula:
G x R = 0.10 - 0.45, preferably 0.10 - 0.35, particularly preferably 0.20 - 0.35,
wherein R denotes the number of reactive groups in the crosslinking agent.

8. A method according to any of the preceding claims, **characterized in that** a compound of formula (I)

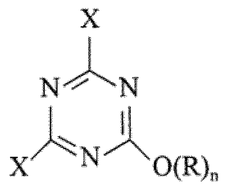

(I)

is used as a crosslinking agent, wherein X represents halogen, R=H or an ionic moiety and n=0 or 1, or, respectively, a salt of this compound, preferably the sodium salt of 2,4-dichloro-6-hydroxy-1.3.5-triazine.

9. A method according to claim 8, **characterized in that** the crosslinking agent of the compound of formula (I) is used in an amount of 30-80 g, preferably 45-60 g, per 1 kg of cellulose atro.

10. A lyocell staple fibre, obtainable by a method according to claim 8 or 9, **characterized in that** the fibre has a permanent crimp and a coefficient of variation of the wet abrasion resistance ($CV_{NSF}$) of lower or equal to 50 %, in particular of lower or equal to 45 %.

11. A lyocell staple fibre, obtainable by a method according to claim 8 or 9, **characterized by** a combination of the following properties:

- the fibre has a titre ranging from 1.2 dtex to 1.5 dtex, preferably from 1.25 dtex to 1.45 dtex;
- the fibre has a permanent crimp;
- the fibre has a fibre strength in the conditioned state of at least 36 cN/tex, preferably ranging from 38 cN/tex to 42 cN/tex;
- the fibre has a Hoeller factor of F1 ≥ 2.1, preferably of ≥ 2.4, particularly preferably ranging from 2.5 to 3.2;
- the fibre has a Hoeller factor of F2 ≥ 3.0, preferably of ≥ 3.5, particularly preferably ranging from 4.0 to 5.5.

12. A lyocell staple fibre, obtainable by a method according to claim 8 or 9, **characterized by** a combination of the following properties:

- the fibre has a titre ranging from 0.6 dtex to 1.2 dtex, preferably from 0.7 dtex to 1.15 dtex, particularly preferably from 0.8 dtex to 1.1 dtex;
- the fibre has a permanent crimp;
- the fibre has a fibre strength in the conditioned state of at least 40 cN/tex, preferably ranging from 42 cN/tex to 49 cN/tex, particularly preferably from 43.5 cN/tex to 46 cN/tex;
- the fibre has a Hoeller factor of F1 ≥ 2.8, preferably of ≥ 3.0, particularly preferably ranging from 3.2 to 3.5;
- the fibre has a Hoeller factor of F2 ≥ 3.0, preferably of ≥ 3.6, particularly preferably ranging from 3.9 to 5.5.

13. A lyocell staple fibre according to claim 11 or 12, **characterized in that** the fibre has a coefficient of variation of the wet abrasion resistance (NSF CV) of lower or equal to 50 %, in particular of lower or equal to 45 %.

14. A lyocell staple fibre according to any of claims 10 to 13, **characterized by** a fibre elongation in the conditioned state of 10 % or more, preferably of 10 % to 11 %.

15. A lyocell staple fibre according to any of claims 10 to 14, **characterized by** a wet abrasion resistance *(NSF)* of 300

r/dtex (revolutions/dtex) or more, preferably 400 r/dtex or more, particularly preferably 450 r/dtex or more.

**16.** A lyocell staple fibre according to any of claims 10 to 15, **characterized in that** it has a content G of crosslinking agent in moles per 1 kg of cellulose atro, which complies with the following formula:
G x R = 0.10 - 0.45, preferably 0.10 - 0.35, particularly preferably 0.20 - 0.35,
wherein R denotes the number of reactive groups in the crosslinking agent.

**17.** A lyocell staple fibre according to claim 16, **characterized in that** the content of the crosslinking agent of the compound of formula (I) amounts to 1.8 - 4.5% by weight, preferably 1.9 - 3.7% by weight, particularly preferably 2.0 - 3.0% by weight, based on cellulose atro.

**18.** A fibre bundle containing at least 20 kg of a lyocell staple fibre according to any of claims 10 to 17.

**19.** A textile article containing a lyocell staple fibre according to any of claims 10 to 17.

**20.** A textile article according to claim 19 in the form of a yarn.

## Revendications

**1.** Procédé de fabrication de fibres discontinues lyocellulaires comprenant les étapes suivantes dans l'ordre indiqué :

a) extrusion de filaments d'une solution de cellulose dans un solvant organique
b) précipitation de la cellulose pour former des filaments de cellulose continus
c) lavage des filaments de cellulose
d) mise en contact des filaments de cellulose avec un agent de réticulation
e) réaction des filaments de cellulose avec l'agent de réticulation dans une chambre de réaction
f) lavage des filaments de cellulose traités
g) découpe des filaments de cellulose lavés en fibres discontinues
h) formation d'une nappe de fibres à partir des fibres discontinues et pressage de la nappe de fibres
i) avivage de la nappe de fibres et pressage de la nappe de fibres.

**2.** Procédé selon la revendication 1, **caractérisé en ce que** les filaments ou les fibres discontinues sont séchés pour la première fois après l'étape i).

**3.** Procédé selon la revendication 1 ou 2, **caractérisé en ce que** la réaction à l'étape e) est réalisé avec un apport d'énergie.

**4.** Procédé selon la revendication 3, **caractérisé en ce que** la réaction à l'étape e) est réalisé en présence de vapeur.

**5.** Procédé selon la revendication 4, **caractérisé en ce que** l'étape e) est réalisée dans une chambre à vapeur.

**6.** Procédé selon une des revendications précédentes, **caractérisé en ce que** la durée de l'étape e) est de 3 à 30 minutes, de préférence de 10 minutes à 25 minutes, de façon particulièrement préférée de 15 à 20 minutes.

**7.** Procédé selon une des revendications précédentes, **caractérisé en ce que** l'agent de réticulation est ajouté dans une quantité de sorte à obtenir une teneur G en agent de réticulation en moles par kg de cellulose atro qui répond à la formule suivante : G x R = 0,10 à 0,45, de préférence 0,10 à 0,35, de façon particulièrement préférée 0,20 à 0,35, où R représente le nombre de groupes réactifs dans l'agent de réticulation.

**8.** Procédé selon une des revendications précédentes, **caractérisé en ce qu'**en guise d'agent de réticulation est utilisé un composé de formule (I)

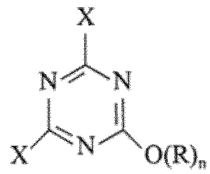

, (I)

où X représente un halogène, R = H ou un résidu ionique et où n = 0 ou 1, ou un sel du composé de cette formule, de préférence un sel de sodium de 2,4-dichloro-6-hydroxy-1.3.5-triazine.

**9.** Procédé selon une des revendications précédentes, **caractérisé en ce que** l'agent de réticulation du composé de formule (I) est ajouté dans un quantité de 30 à 80 g, de préférence de 45 à 60 g par kg de cellulose atro.

**10.** Fibre discontinue lyocellulaire pouvant être obtenue par un procédé selon la revendication 8 ou 9, **caractérisée en ce que** cette fibre présente une ondulation permanente et un coefficient de variation de la résistance au récurage ($CV_{NSF}$) inférieur ou égal à 50%, en particulier inférieur à 45%.

**11.** Fibre discontinue lyocellulaire pouvant être obtenue par un procédé selon la revendication 8 ou 9, **caractérisée par** la combinaison des caractéristiques suivantes :

- la fibre présente un titre de 1,2 dtex à 1,5 dtex, de préférence de 1,25 dtex à 1,45 dtex,
- la fibre présente une ondulation permanente,
- la fibre présente une résistance de fibre à l'état conditionné d'au moins 36 cN/tex, de préférence de 38 cN/tex à 42 cN/tex,
- la fibre présente un facteur de Hδller F1 ≥ 2,1, de préférence ≥ 2,4, de façon particulièrement préférée de 2,5 à 3,2 et
- la fibre présente un facteur de Hδller F2 ≥ 3,0, de préférence ≥ 3,5, de façon particulièrement préférée de 4,0 à 5,5.

**12.** Fibre discontinue lyocellulaire pouvant être obtenue par un procédé selon la revendication 8 ou 9, **caractérisée par** la combinaison des caractéristiques suivantes :

- la fibre présente un titre de 0,6 dtex à 1,2 dtex, de préférence de 0,7 dtex à 1,15 dtex, de façon particulièrement préférée de 0,8 à 1,1 dtex,
- la fibre présente une ondulation permanente,
- la fibre présente une résistance de fibre à l'état conditionné d'au moins 40 cN/tex, de préférence de 42 cN/tex à 49 cN/tex, de façon particulièrement préférée de 43,5 cN/tex à 46 cN/tex,
- la fibre présente un facteur de Hδller F1 ≥ 2,8, de préférence ≥ 3,0, de façon particulièrement préférée de 3,2 à 3,5 et
- la fibre présente un facteur de Hδller F2 ≥ 3,0, de préférence ≥ 3,6, de façon particulièrement préférée de 3,9 à 5,5.

**13.** Fibre discontinue lyocellulaire selon la revendication 11 ou 12, **caractérisée en ce qu'**elle présente un coefficient de variation de la résistance au récurage (NSF CV) inférieur ou égal à 50%, en particulier inférieur à 45%.

**14.** Fibre discontinue lyocellulaire selon une des revendications 10 à 13, **caractérisée par** un allongement de fibre à l'état conditionné de 10% ou plus, de préférence de 10% à 11%.

**15.** Fibre discontinue lyocellulaire selon une des revendications 10 à 14, **caractérisée par** une résistance au récurage *(NSF)* de 300 t/dtex (tours/dtex) ou plus, de préférence de 400 t/dtex ou plus, de façon particulièrement préférée de 450 t/dtex ou plus.

**16.** Fibre discontinue lyocellulaire selon une des revendications 10 à 15, **caractérisée en ce qu'**elle présente une teneur G en agent de réticulation en moles par kg de cellulose atro qui répond à la formule suivante :
G x R = 0,10 à 0,45, de préférence 0,10 à 0,35, de façon particulièrement préférée 0,20 à 0,35, où R représente le nombre de groupes réactifs dans l'agent de réticulation.

**17.** Fibre discontinue lyocellulaire selon la revendication 16, **caractérisée en ce que** la teneur G en agent de réticulation

du composé de formule (I) est de 1,8% à 4,5% en poids, de préférence de 1,9 à 3,7% en poids, de façon particulièrement préférée de 2,0 à 3,0% en poids par rapport à la cellulose atro.

**18.** Faisceau de fibres contenant au moins 20 kg d'une fibre discontinue lyocellulaire selon une des revendications 10 à 17.

**19.** Article textile contenant une fibre discontinue lyocellulaire selon une des revendications 10 à 17.

**20.** Article textile selon la revendication 19 sous la forme d'un fil.

Fig. 1

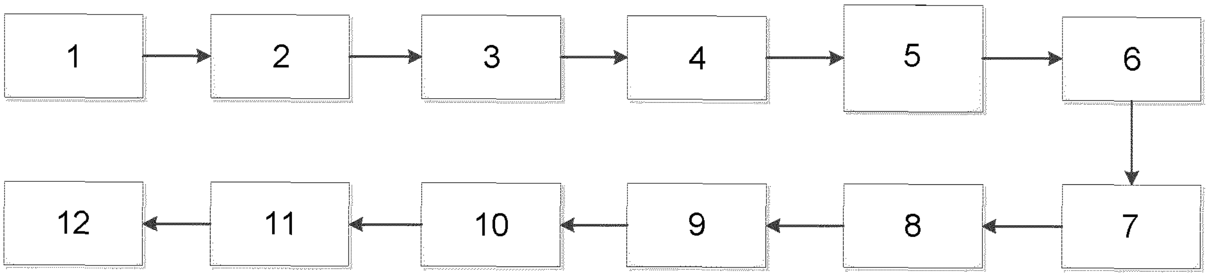


Fig. 2

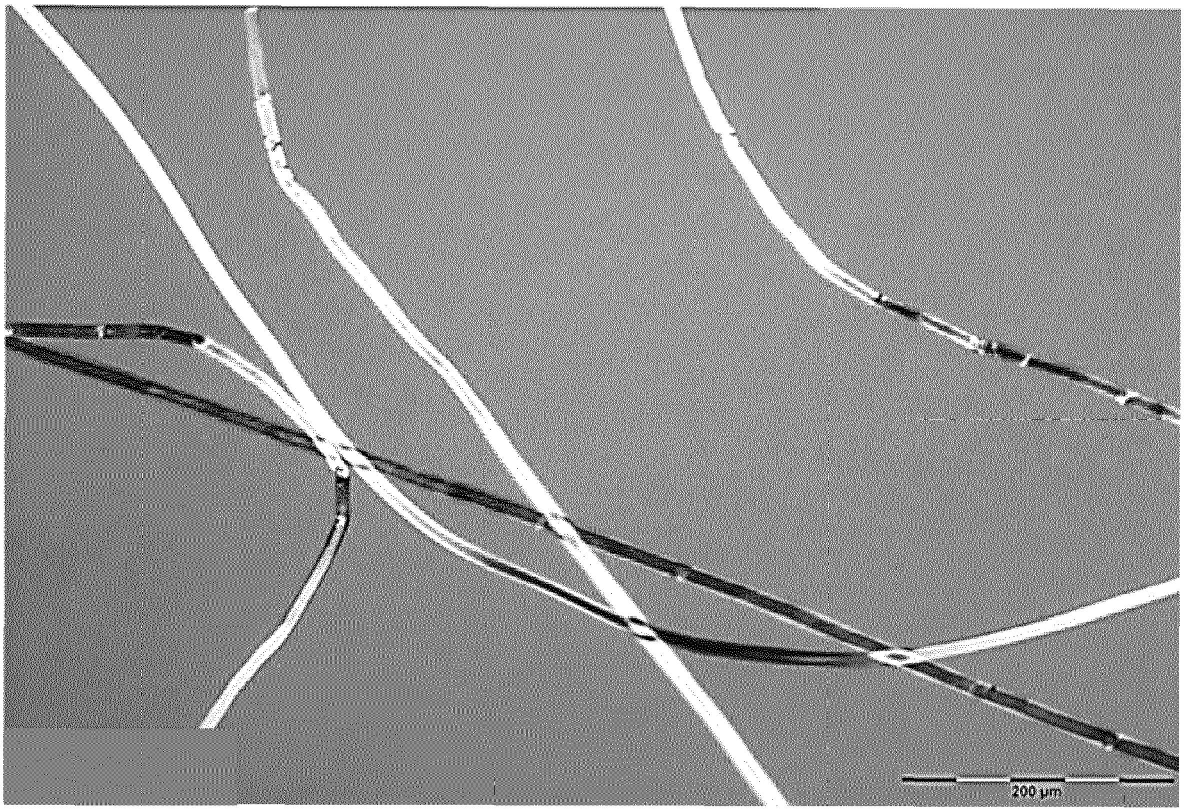

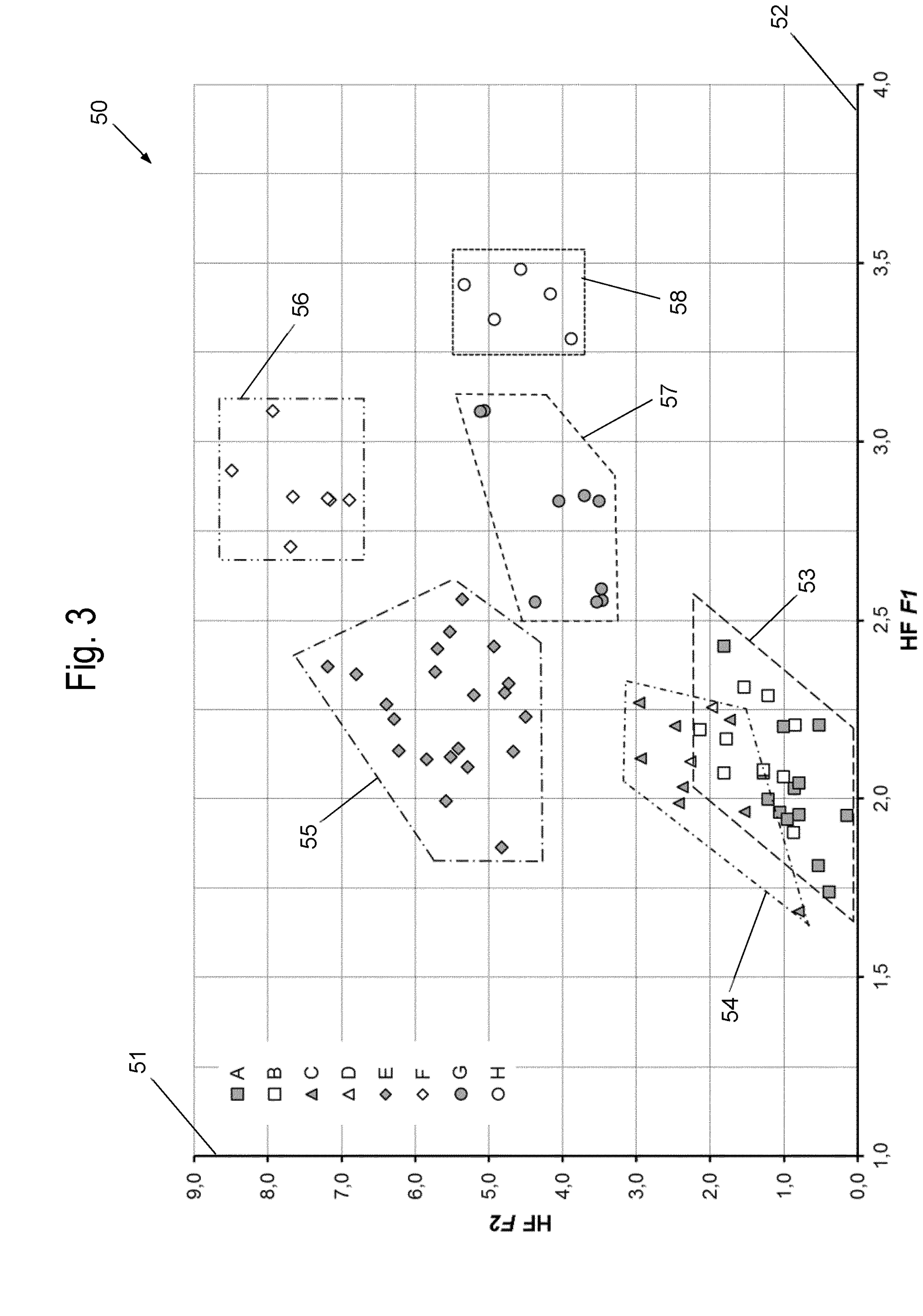
50
51
52
53
54
55
56
57
58
HF F1
HF F2
1,0
1,5
2,0
2,5
3,0
3,5
4,0
0,0
1,0
2,0
3,0
4,0
5,0
6,0
7,0
8,0
9,0
A
B
C
D
E
F
G
H

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0553070 A
- US 4246221 A
- WO 9319230 A
- EP 0538977 A
- WO 9749856 A
- WO 9919555 A
- WO 9409191 A
- WO 9528516 A
- WO 9427903 A
- WO 9524520 A
- WO 9828516 A
- WO 9714829 A
- US 5562739 A
- GB 2373784 A
- WO 2004007818 A1
- CN 204265902 U
- CN 203960407 U
- CN 203904520 U
- CN 203403200 U
- CN 203402582 U
- CN 204000264 U
- CN 203999953 U
- CN 106757906 A
- CN 108360182 A
- WO 2015101543 A
- WO 2019170670 A1
- WO 2010031091 A1


### In der Beschreibung aufgeführte Nicht-Patentliteratur


- **HÖLLER ; PUCHEGGER.** *Melliand Textilberichte,* 1984, vol. 65, 573-574
- Prüfverfahren Viskose, Modal, Lyocell und Acetat Stapelfasern und Seile. 2004
- *Lenzinger Berichte,* 2013, vol. 91, 07-12
- Zur Fasernassscheuerung von Viskosefasern. *Faserforschung and Textiltechnik,* 1968, vol. 19 (10), 447-452